(19) Europäisches Patentamt
European Patent Office
Office européen des brevets

(11) EP 3 548 534 B1

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **17809277.1**

(22) Anmeldetag: **04.12.2017**

(51) Int Cl.:
***C08G 18/76*** *(2006.01)* ***C08G 18/30*** *(2006.01)*
***C08G 18/32*** *(2006.01)* ***C08G 18/34*** *(2006.01)*
***C08G 18/48*** *(2006.01)*

(86) Internationale Anmeldenummer:
**PCT/EP2017/081362**

(87) Internationale Veröffentlichungsnummer:
**WO 2018/104221 (14.06.2018 Gazette 2018/24)**

(54) **VERFAHREN ZUR HERSTELLUNG VON TDI-BASIERTEN POLYURETHANWEICHSCHAUMSTOFFEN ENTHALTEND ORGANISCHE SÄUREANHYDRIDE UND/ODER ORGANISCHE SÄURECHLORIDE**

METHOD FOR THE PREPARATION OF TDI-BASED POLYURETHANE FOAMS CONTAINING ORGANIC ACID ANHYDRIDES AND/OR ORGANIC ACID CHLORIDES

PROCÉDÉ DE FABRICATION DE MOUSSES SOUPLES EN POLYURÉTHANE À BASE DE TDI COMPRENANT DES ANHYDRIDES D’ACIDE ORGANIQUES ET/OU DES CHLORURES D’ACIDES ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2016 EP 16202103**

(43) Veröffentlichungstag der Anmeldung:
**09.10.2019 Patentblatt 2019/41**

(73) Patentinhaber: **Covestro Intellectual Property GmbH & Co. KG**
**51373 Leverkusen (DE)**

(72) Erfinder: **LINDNER, Stefan**
**42857 Remscheid (DE)**

(74) Vertreter: **Levpat**
**c/o Covestro AG**
**Gebäude 4825**
**51365 Leverkusen (DE)**

(56) Entgegenhaltungen:
**EP-B1- 1 117 718 DE-B3- 10 343 099**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 548 534 B1

## Beschreibung

Die vorliegende Erfindung betrifft ein Verfahren zur Herstellung von TDI-basierten Polyurethanweichschaumstoffen, insbesondere von Formschäumen, unter Verwendung von organischen Säureanhydriden und/oder organische Säurechloriden. Die Erfindung betrifft weiterhin die durch das erfindungsgemäße Verfahren hergestellten Polyurethanweichschaumstoffe.

Die Herstellung von Polyurethanen, durch Umsetzung von Polyisocyanaten mit Polyolen, Katalysatoren, die die Reaktion der Polyole mit den Isocyanaten beschleunigen und gegebenenfalls Treibmitteln, wie Wasser, Zusatzstoffen, und/oder Hilfsmitteln ist allgemein bekannt.

Zur Herstellung von Polsterungen, beispielsweise solchen, welche in der Automobilindustrie z.B. in Form von Sitzpolstern, Verwendung finden, spielen TDI-basierte Polyurethanweichschaumstoffe eine wesentliche Rolle. Bei der Herstellung solcher Schäume kann ein niedriger Isocyanat-Index vorteilhaft sein, da dadurch eine niedrigere Härte erzielt werden kann. Darüberhinaus sollten diese Schäume eine hohe Rohdichte haben, da dies zu einem besseren Komfortgefühl führt. Gerade aber bei der Herstellung solcher TDI-basierter Weichschäume bei niedrigem Isocyanat-Index und mit hoher Rohdichte, tritt das Problem von erhöhten Fog-Werten nach VDA 278 im besonderen Maße auf. Der VDA 278 Test ist eine Thermodesorptionsanalyse organischer Emissionen zur Charakterisierung nichtmetallischer Kfz-Werkstoffe. Der Summenwert des Fog-Wertes beschreibt den Anteil der kondensierbaren Substanzen aus einem Material, der mit Hilfe des VDA 278 bestimmt werden kann. Der Zielwert des Fog-Wertes ist ≤ 250 mg/kg.

Bei TDI-basierten Polyurethanweichformschaumstoffen treten diese höheren Fog-Werte im Besonderen in der Randzone (Haut) des Schaums auf. Es ist wünschenswert den Gehalt dieser unerwünschten Stoffe in der Haut der Formschaumstoffe zu reduzieren.

Die Aufgabe der vorliegenden Erfindung war daher die Bereitstellung von TDI-basierten Polyurethanweichschäumen, bevorzugt Formschäumen, die bei niedrigem Isocyanat-Index hergestellt werden und eine hohe Rohdichte aufweisen, und die gleichzeitig möglichst niedrige Emissionen im VDA 278 (Fog-Wert) aufweisen.

Gelöst wurde diese Aufgabe mittels zweier alternativer Wege:

- durch die Mitverwendung eines molaren Anteils von ≥ 0,20 bis ≤ 1,25 mol-% mindestens eines cyclischen Carbonsäureanhydrids, bezogen auf die Menge an eingesetzten TDI, bei der Polyurethanherstellung, bzw.
- durch die Mitverwendung eines molaren Anteils von ≥ 0,15 bis ≤ 1,25 mol-% mindestens eines Carbonsäurechlorids, bezogen auf die Menge an eingesetzten TDI, bei der Polyurethanherstellung.

Die Berechnung des molaren Anteils erfolgt wie folgt:

$$\text{Molare Anteil } [\text{mol}-\%] = \frac{\frac{\text{m(Säureanhydrid)}}{\text{M(Säureanhydrid)}}}{\frac{\text{m(TDI)}}{\text{M(TDI)}}} * 100\% \qquad (\text{I})$$

wobei m die Masse und M die molare Masse ist. Bei polymeren Verbindungen, d.h. Verbindungen mit mehreren Anhydridgruppen, erfolgt die Berechnung des molaren Anteils [mol-%] durch Bildung des Quotienten aus der Masse m des Säureanhydrid-Monomers und der molaren Masse des Säureanhydrid-Monomers.
Die Berechnung für das Säurechlorid erfolgt analog.

Gegenstand der Erfindung ist daher ein Verfahren zur Herstellung von TDI-basierten Polyurethanweichschaumstoffen, bevorzugt Formschaumstoffen, mit einer Rohdichte von ≥ 20 kg $m^3$ durch Umsetzung von TDI mit mindestens einer Hydroxylgruppen-haltigen Verbindung in Gegenwart von Treibmitteln und ggf. Hilfs- und/oder Zusatzstoffen bei einem Isocyanat-Index von ≥ 70 bis ≤ 85, dadurch gekennzeichnet, dass die Umsetzung

- in Gegenwart von ≥ 0,20 bis ≤ 1,25 mol-%, bevorzugt ≥ 0,25 bis ≤ 1,0 mol-%, besonders bevorzugt ≥ 0,26 bis ≤ 1,0 mol-% mindestens eines cyclischen Anhydrids einer Di- und/oder Polycarbonsäure, bezogen auf die Menge an eingesetztem TDI, oder
- in Gegenwart von ≥ 0,15 bis ≤ 1,25 mol-%, bevorzugt ≥ 0,25 bis ≤ 1,0 mol-%, besonders bevorzugt ≥ 0,26 bis ≤ 1,0 mol-% mindestens eines Carbonsäurechlorids, bezogen auf die Menge an eingesetztem TDI,

erfolgt.

Unter cyclischen Anhydriden im Sinne der Erfindung werden Anhydride verstanden, die sich intramolekular durch Wasserabspaltung aus Di- oder Polycarbonsäuren bilden.

Ebenso sind die mittels dieses Verfahrens erhältlichen Polyurethanweichschaumstoffe, wobei es sich bevorzugt um Formschaumstoffe handelt, ein weiterer Gegenstand der Erfindung.

EP 1 117 718 B1 beschreibt ein Verfahren zur Herstellung von geschäumten Polyisocyanat-Polyadditionsprodukten unter Verwendung von organischen oder anorganischen Säureanhydriden zwecks Reduktion des Amingehalts in den Schäumen. Zwar wird in einer langen Liste zu verwendender Isocyanate auch TDI erwähnt. Einen Bezug speziell auf TDI-basierte Schäume oder - noch spezieller- TDI-basierte Formschäume, die bei einem Isocyanat-Index von maximal 85 und mit einer Rohdichte von mindestens 20 kg $m^{-3}$ hergestellt werden, gibt es nicht. Noch weniger ist der Schrift ein Hinweis darauf zu entnehmen, dass das Problem der Reduzierung von Aminen in diesen speziellen Schäumen und der damit verbundenen Emissionen durch die Verwendung von Anhydriden in Mengen von 0,20 bis 1,25 mol-% bezogen auf die Menge an eingesetzten TDI gelöst werden kann. Im Gegenteil: Die EP-Schrift verweist zwar generell auf Mengen von 0,1 bis 6 Gewichtsprozent (Seite 7, [0052]). In den auf TDI basierten Beispielen werden die Anhydride jedoch in Mengen von mindestens 1,0 Gewichtsprozent (Tabelle 6, Beispiel 23 (Maleinsäureanhydrid)), entsprechend etwa 1,776 mol-%, bis 4,3 Gewichtsprozent (Tabelle 6, Beispiel 26 (Dodecenylbernsteinsäureanhydrid)), entsprechend etwa 2,811 mol-%, eingesetzt. Damit lehrt die EP 1 117 718 B1 weg von der Verwendung der Anhydride im beanspruchten Bereich der vorliegenden Erfindung.

DE 10343099 beschreibt die Herstellung von Formteilen aus Polyurethan, wobei dem Isocyanat zwecks Reduzierung des Amin-Gehalts Carbonsäureanhydride zugesetzt werden. Dabei handelt es sich um Anhydride von Monocarbonsäuren (Anspruch 1, sowie Abschnitt [0014], 12. Zeile und Abschnitt [0016]) und Polyanhydride von Mono- oder Polycarbonsäuren (Anspruch 1 und sowie Abschnitt [0014], 14./15. Zeile). Die Verwendung cyclischer Anhydride von Di- bzw. Polycarbonsäuren wird nicht beschrieben. Die eingesetzten Mengen an Anhydrid sind mit 10 Gewichts-%, bezogen auf die Isocanatkomponente, sehr hoch (TDI-basierte Beipiele in [0063] und [0064].)

Beschreibung der Verfahrens- und Produktparameter und der im erfindungsgemäßen Verfahren zu verwendenden Komponenten:

Wie oben ausgeführt ist Gegenstand der Erfindung ein Verfahren zur Herstellung von TDI-basierten Polyurethanweichschaumstoffen, bevorzugt Formschaumstoffen, mit einer Rohdichte von $\geq$ 20 kg $m^3$ durch Umsetzung von TDI mit mindestens einer Hydroxylgruppen-haltigen Verbindung in Gegenwart von Treibmitteln und ggf. Hilfs- und/oder Zusatzstoffen bei einem Isocyanat-Index von $\geq$ 70 bis $\leq$ 85, dadurch gekennzeichnet, dass die Umsetzung

- in Gegenwart von $\geq$ 0,20 bis $\leq$ 1,25 mol-%, bevorzugt $\geq$ 0,25 bis $\leq$ 1,0 mol-%, besonders bevorzugt $\geq$ 0,26 bis $\leq$ 1,0 mol-% mindestens eines cyclischen Anhydrids einer Di- und/oder Polycarbonsäure, bezogen auf die Menge an eingesetztem TDI, oder
- in Gegenwart von $\geq$ 0,15 bis $\leq$ 1,25 mol-%, bevorzugt $\geq$ 0,25 bis $\leq$ 1,0 mol-%, besonders bevorzugt $\geq$ 0,26 bis $\leq$ 1,0 mol-% mindestens eines Carbonsäurechlorids, bezogen auf die Menge an eingesetztem TDI, erfolgt.

Wird eine Mischung mehrerer Anhydride eingesetzt, so bezieht sich die Mengenangabe auf die Summe der Anhydride. Wird eine Mischung mehrerer Chloride eingesetzt, so bezieht sich die Mengenangabe auf die Summe der Chloride.

Der Isocyanat-Index (auch Kennzahl) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an:

$$\text{Kennzahl} = [\text{Isocyanat-Menge eingesetzt}) : (\text{Isocyanat-Menge berechnet}) \bullet 100 \qquad \text{(II)}$$

Die Rohdichte des Schaums beträgt bevorzugt $\geq$ 30 kg $m^3$, besonders bevorzugt $\geq$ 40 kg $m^3$.

Als **cyclische Anhydride** werden beispielsweise Verbindungen der Formel (III), (IV) oder (V) eingesetzt,

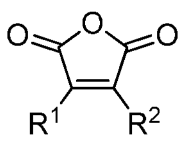
(III)

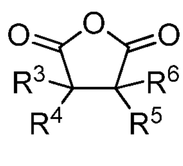
(IV)

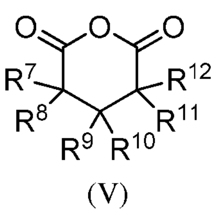
(V)

wobei

R1 und R2 für Wasserstoff, Halogen, C1-C22-Alkyl, C1-C22-Alkenyl oder C6-C18-Aryl stehen oder R1 und R2 Glieder eines 4 bis 7 gliedrigen Rings oder polycyclischen Systems sein können, vorzugsweise ergeben R1 und

R2 gemeinsam einen Benzolring,
R3, R4, R5 und R6 für Wasserstoff, C1-C22-Alkyl, C1-C22-Alkenyl oder C6-C18-Aryl stehen oder Glieder eines 4 bis 7 gliedrigen Rings oder polycyclischen Systems sein können und
R7, R8, R9, R10, R11 und R12 für Wasserstoff, C1-C22-Alkyl, C1-C22-Alkenyl oder C6-C18-Aryl stehen oder Glieder eines 4 bis 7 gliedrigen Rings oder polycyclischen Systems sein können,
wobei die Verbindungen der Formel III und IV und V auch durch Chlor, Brom, Nitrogruppen oder Alkoxygruppen substituiert sein können.

Als **cyclische Anhydride** werden beispielsweise folgende Verbindungen eingesetzt: Malonsäureanhydrid, Methylenmalonsäureanhydrid, Maleinsäureanhydrid, Citraconsäureanhydrid, 1,2-Cyclohexandicarbonsäureanhydrid, Diphensäureanhydrid, Phthalsäureanhydrid, Tetrahydrophthalsäureanhydrid, Methyltetrahydrophthalsäureanhydrid, Hexahydrophthalsäureanhydrid, Methylhexahydrophthalsäureanhydrid Norbornendisäureanhydrid und ihre Chlorierungsprodukte, Nadic Methyl anhydride (=Methyl-5-norbornene-2,3-dicarboxylicanhydride), Bernsteinsäureanhydrid, Glutarsäure-anhydrid, Diglykolsäureanhydrid, Naphthalin-1,8-dicarbonsäureanhydrid (Naphthalsäureanhydrid), Naphthalin-1,2-dicarbonsäureanhydrid, Bernsteinsäureanhydrid, 3- und 4-Nitrophthalsäureanhydrid, Tetrachlorphthalsäureanhydrid, Tetrabromphthalsäureanhydrid, Itaconsäureanhydrid, Allylnorbornendisäureanhydrid, Adipinsäureanhydrid, Bis(2,3-dicarboxyphenyl)methananhydrid, Bis(3,4-dicarboxyphenyl) methananhydrid, 1,1-Bis(2,3-dicarboxyphenyl)ethananhydrid, 1,1-Bis(3,4-dicarboxyphenyl) ethananhydrid, 2,2-Bis(2,3-dicarboxyphenyl)propananhydrid, 2,2-Bis(3,4-dicarboxyphenyl) propananhydrid, Bis(3,4-dicarboxyphenyl)sulfonanhydrid, Bis(3,4-dicarboxyphenyl)ether anhydrid, Trimellithsäureanhydrid (Benzol-1,2,4-tricarbonsäureanhydrid), 4,4'-Ethylenglykolbis-anhydrotrimellithat, 4,4'-(2-Acetyl-1,3-glycerin)bis-anhydrotrimellithat, Benzol-1,2,3-tricarbonsäureanhydrid (Hemimellitsäureanhydrid), Mellophansäureanhydrid (Benzol-1,2,3,4-tetracarbonsäureanhydrid), Pyromellitsäureanhydrid (Benzol-1,2,4,5-tetracarbonsäureanhydrid), Diphenyl-3,3'-4,4'-tetracarbonsäureanhydrid, Diphenyl-2,2'-3,3'tetracarbonsäureanhydrid, Naphthalin-2 ,3, 6,7-tetracarbonsäureanhydrid, Naphthalin-1 ,2,4,5-tetracarbonsäureanhydrid, Naphthalin-1,4,5,8-tetracarbonsäure-anhydrid, Decahydronaphthalin-1,4,5,8-tetracarbonsäureanhydrid, 4,8-Dimethyl-1,2,3,5,6,7-hexahydronaphthalin-1,2,5,6-tetracarbonsäureanhydrid, 2,6-Dichloronaphthalin-1,4,5,8-tetracarbonsäureanhydrid, 2,7-Dichloronaphthalin-1,4,5,8-tetracarbonsäureanhydrid, 2,3,6,7-Tetrachloronaphthalin-1,4,5,8-tetracarbonsäureanhydrid, Phenanthren-1,3,9,10-tetracarbonsäureanhydrid, Perylen-3,4,9,10-Tetracarbonsäureanhydrid, Ethylentetracarbonsäureanhydrid, Butan-1,2,3,4-tetracarbonsäureanhydrid, Cyclopentan- 1,2,3,4-tetracarbonsäureanhydrid, Pyrrolidin-2,3,4,5-tetracarbonsäureanhydrid, Pyrazin-2,3,5,6-tetracarbonsäureanhydrid, Thiophen-2,3,4,5-tetracarbonsäure-anhydrid, Benzophenon-3,3',4,4'-tetracarbonsäureanhydrid, Mellithsäureanhydrid, Alkyl- oder Alkenylbernsteinsäuren mit unverzweigten oder verzweigten C1 bis C24 -Alkyl- bzw. - Alkenylketten, wie (1-Dodecen-1-yl) oder 2-Dodecen-1-yl)bernsteinsäureanhydrid, n-Octenyl-Bernsteinsäureanhydrid, Tetradecenylbernsteinsäureanhydrid, Hexadecenylbernsteinsäureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, Anhydride auf der Basis von Addukten von Maleinsäureanhydrid und Styrol, Anhydride aus Maleinsäure und beliebigen Alkylenen, wie n-Octylen-Bernsteinsäureanhydrid oder n-Dodecylenbernsteinsäureanhydrid, und/oder Copolymere aus ungesättigten Carbonsäurenhydriden der zuvor genannten Art und beliebigen weiteren Comonomeren, wie Isobuten und Maleinsäureanhydrid, Poly-(ethylen-co-acrylsäurebutylester-co-maleinsäuredianhydrid) und/oder Poly-(styrol-co-maleinsäureanhydrid), wobei die entsprechenden Di- oder Polysäuren teilweise oder bevorzugt vollständig als Anhydride vorliegen.
Als Comonomere, die mit den ungesättigten Carbonsäuren bzw. Carbonsäureanhydriden copolymerisierbar sind, können beispielsweise des weiteren Verwendung finden: Olefine wie z.B. Ethylen, Propylen, n-Butylen, Isobutylen, n-Octylen, n-Dodicylen und Diisobuten, Vinylalkylether, wie z.B. Vinylmethyl-, Vinylethyl-, Vinylpropyl-, Vinylisopropyl-, Vinylbutyl-, Vinylisobutyl- und Vinyl-tert.-butylether, Vinylaromaten, wie z.B. Styrol und a-Methylstyrol, Furan und 2-Methylfuran, Diketen, Acryl- und Methacrylsäurederivate, beispielsweise (Meth)acrylamid, (Meth)acrylnitril, Alkyl(meth)acrylate, wie z.B. Methyl(meth)acrylat, Ethyl(meth)acrylat, Propyl(meth)acrylat, Butyl(meth)acrylat, Isobutyl(meth)acrylat und tert-Butyl(meth)acrylat, Hydroxyalkyl(meth)acrylate, wie z.B. Hydroxyethyl(meth)acrylat, Hydroxypropyl(meth)acrylat, Hydroxybutyl-(meth)acrylat und Hydroxyisobutyl(meth)acrylat, Vinylcarbonsäureester, wie z.B. Vinylformiat, Vinylacetat, Vinylbutyrat und Vinylpivalat und andere vinylgruppenhaltige Monomere wie z.B. N-Vinylpyrrolidon, N-Vinylcaprolactam, N-Vinylformamid, N-Vinylacetamid, N-Vinylmethylacetamid und N-Vinylimidazol.
Bevorzugt werden als cyclische Anhydride eingesetzt: Maleinsäureanhydrid, Bernsteinsäureanhydrid, Citraconsäureanhydrid, Phthalsäureanhydrid, Naphthalsäureanhydrid, Pyromellithsäureanhydrid, Trimellithsäureanydrid, Mellithsäureanhydrid, Nadic Methyl anhydride (=Methyl-5-norbornene-2,3-dicarboxylicanhydride), Hexahydrophthalsäureanhydrid, Methylhexahydrophthalsäureanhydrid, Tetrahydrophthalsäureanhydrid, Methyltetrahydrophthalsäureanhydrid, Alkyl- und Alkenylbernsteinsäuren mit unverzweigten oder verzweigten C1 bis C24 Alkyl- bzw. Alkenylketten, wie (1-Dodecen-1-yl) oder 2-Dodecen-1-yl)-bernsteinsäureanhydrid, Alkyl- und/oder Alkenylmaleinsäuren mit unverzweigten oder verzweigten C1 bis C24 Alkyl- bzw. -Alkenylketten, wie n-Dodecenylmaleinsäureanhydrid, Addukte von

Maleinsäureanhydrid und Styrol, Anhydride aus Maleinsäure und beliebigen Alkylenen, wie n-Octylen-Bernsteinsäureanhydrid oder n-Dodecylenbernsteinsäureanhydrid, Copolymere aus ungesättigten Carbonsäurehydriden und Alkenen, beispielsweise den oben beschriebenen Comonomeren.

Besonders bevorzugte cyclische Anhydride sind Maleinsäureanhydrid, Bernsteinsäureanhydrid, Citraconsäureanhydrid, Phthalsäureanhydrid, Naphthalsäureanhydrid, Nadic Methyl anhydride (=Methyl-5-norbornene-2,3-dicarboxylicanhydride), Hexahydrophthalsäureanhydrid, Methylhexahydrophthalsäureanhydrid, Tetrahydrophthalsäureanhydrid, Methyltetrahydrophthalsäureanhydrid und Alkyl- und Alkenylbernsteinsäuren mit unverzweigten oder verzweigten C1 bis C24 Alkyl- bzw. Alkenylketten, wie (1-Dodecen-1-yl) oder 2-Dodecen-1-yl)-bernsteinsäureanhydrid und Alkyl- und/oder Alkenylmaleinsäuren mit unverzweigten oder verzweigten C1 bis C24 Alkyl- bzw. Alkenylketten, wie n-Dodecenylmaleinsäureanhydrid.

Die cyclischen Anhydride können in Mischung mit der Polyolkomponente und/oder dem TDI eingesetzt werden. Bevorzugt werden die Anhydride in Mischung mit der Polyolkomponente kurz vor der Polyurethanreaktion zugegeben.

Die erfindungsgemäß einsetzbaren **Carbonsäurechloride** sind nicht eingeschränkt. Im allgemeinen werden aliphatische Carbonsäurechloride mit 2 bis 22 Kohlenstoffatomen oder Gemische von $C_8$- bis $C_{22}$-Carbonsäurechloriden, deren Reste verzweigt oder linear, gesättigt oder ungesättigt und gegebenenfalls beispielsweise mit Halogen- oder Nitrogruppen substituiert sein können, eingesetzt. Des Weiteren können aromatische und cycloaliphatische Carbonsäurechloride sowie aralkyl- oder alkylarylsubstituierte Carbonsäurechloride mit 7 bis 24 Kohlenstoffatomen eingesetzt werden. Geeignete Säurechloride können eine bis drei Carboxylgruppen enthalten. Geeignete aliphatische Säurechloride sind beispielsweise Pivalinsäurechlorid, 2-Ethylhexansäurechlorid, Stearinsäurechlorid, Butyrsäurechlorid, Laurylsäurechlorid, Palmitinsäurechlorid, Essigsäurechlorid, Neopentansäurechlorid, Chloressigsäurechlorid, Dichloressigsäurechlorid, Adipinsäurechlorid, Sebacinsäurechlorid, Acrylsäurechlorid, Methacrylsäurechlorid usw. Geeignete aromatische Säurechloride sind beispielsweise Benzoesäurechlorid, m-Nitrobenzoesäurechlorid, Isophthalsäurechlorid, Phenylessigsäurechlorid, p-Chlorbenzoesäurechlorid, trans-Zimtsäurechlorid, m-Toluolsäurechlorid usw. Ein Beispiel für eine geeignete cycloaliphatische Säure ist Cyclohexancarbonsäurechlorid.

Neben Polyetherpolyolen können in der Polyolformulierung zur Herstellung der Polyurethane weitere hydroxylgruppenhaltige Verbindungen (Polyole) eingesetzt werden. Diese an sich bekannten Polyole werden z.B. ausführlich beschrieben in Gum, Riese & Ulrich (Hrsg.): "Reaction Polymers", Hanser Verlag, München 1992, S. 66-96 und G. Oertel (Hrsg.): "Kunststoffhandbuch, Band 7, Polyurethane", Hanser Verlag, München 1993, S. 57-75. Beispiele geeigneter Polyole finden sich in den genannten Literaturstellen sowie in US-A 3 652 639, US-A 4 421 872 und US-A 4 310 632.

Bevorzugt eingesetzte Polyole sind Polyetherpolyole (insbesondere Poly(oxyalkylen)polyole) und Polyesterpolyole.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, $\alpha,\beta$-Naphthylamin, Ammoniak, Ethylendiamin, Propylendiamin, 1,4-Butylendiamin, 1,2-, 1,3-, 1,4-, 1,5-und/oder 1,6-Hexamethylendiamin, o-, m-, und p-Phenylendiamin, 2,4-, 2,6-Toluylendiamin, 2,2'-, 2,4- und 4,4"-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen. Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

Die Polyaddition kann beispielsweise auch DMC-katalysiert erfolgen. DMC-Katalysatoren und deren Verwendung zur Herstellung von Polyetherpolyolen sind beispielsweise beschrieben in US 3 404 109, US 3 829 505, US 3 941 849, US 5 158 922, US 5 470 813, EP-A 700 949, EP-A 743 093, EP-A 761 708, WO-A 97/40086, WO-A 98/16310 und WO-A 00/47649.

Neben diesen "einfachen" Polyetherpoyolen können auch Polyethercarbonatpolyole im erfindungsgemäßen Verfahren eingesetzt werden. Polyethercarbonatpolyole können z.B. durch katalytische Umsetzung von Ethylenoxid und Propylenoxid, ggf. weiteren Alkylenoxiden, und Kohlendioxid in Anwesenheit von H-funktionellen Startersubstanzen erhalten werden (siehe z.B. EP-A 2046861).

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder

Maleinsäure.
Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.
Die Herstellung der Polyesterpolyole kann weiterhin auch durch Ringöffnungspolymerisation von Lactonen (z.B. Caprolacton) mit Diolen und/oder Triolen als Starter erfolgen.

Die oben beschriebenen Polyetherpolyole, Polyethercarbonatpoylole und Polyesterpolyole können auch unter Mitverwendung von füllstoffhaltigen Polyolen wie z.B. Polymerpolyolen (Styrol-Acrylnitril-Copolymerisate) oder Polyharnstoff-Dispersion-Polyolen etc. für die Herstellung der Polyurethan-Weichschäume eingesetzt werden.

Zusätzlich kann bei der Herstellung der erfindungsgemäßen Polyurethane eine Vernetzerkomponente zugesetzt werden. Als derartige Vernetzer sind z.B. Diethanolamin, Triethanolamin, Glycerin, Trimethylolpropan (TMP), Addukte von solchen Vernetzerverbindungen mit Ethylenoxid und/oder Propylenoxid mit einer OH-Zahl < 1.000 oder auch Glykole mit einem zahlenmittleren Molekulargewicht ≤ 1.000 brauchbar. Besonders bevorzugt sind Triethanolamin, Glycerin, TMP oder niedrige EO- und/oder PO-Addukte hiervon.

Weiterhin können gegebenenfalls bekannte Hilfs-, Zusatz- und/oder Flammschutzmittel zugesetzt werden. Unter Hilfsstoffen werden dabei insbesondere an sich bekannte Katalysatoren und Stabilisatoren verstanden. Als Flammschutzmittel ist z.B. Melamin oder TCPP einsetzbar.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff). Es können einbaubare oder nicht einbaubare Katalysatoren eingesetzt werden.

Als Katalysatoren können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden. Selbstverständlich können alle genannten Katalysatoren auch als Gemische eingesetzt werden.

Weitere Vertreter von zu verwendenden Katalysatoren sowie Einzelheiten über die Wirkungsweise der Katalysatoren sind im Vieweg und Höchtlen (Hrsg.): Kunststoff-Handbuch, Band VII, Carl-Hanser-Verlag, München 1966, S. 96 -102 beschrieben.

Die Katalysatoren werden in der Regel in Mengen von etwa 0,001 bis 10 Gew.-%, bezogen auf die Gesamtmenge an Verbindungen mit mindestens zwei gegenüber Isocyanaten reaktionsfähigen Wasserstoffatomen eingesetzt.

Weitere gegebenenfalls eingesetzte Zusatzstoffe sind oberflächenaktive Zusatzstoffe wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, zum Einsatz. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523.

Weitere mögliche Zusatzstoffe sind Reaktionsverzögerer, z.B. sauer reagierende Stoffe wie Salzsäure oder organische Säurehalogenide, ferner an sich bekannte Zellregler wie Paraffine oder Fettalkohole oder Dimethylpolysiloxane sowie an sich bekannte Pigmente oder Farbstoffe und Flammschutzmittel, z.B. Tris(2-chlorisopropyl)phosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg und Höchtlen (Hrsg.): Kunststoff-Handbuch, Band VII, Carl-Hanser-Verlag, München 1966, S. 103 - 113 beschrieben.

Als einzusetzende Treibmittelkomponente sind alle bei der Polyurethan-Schaumstoffherstellung bekannten Treibmittel möglich. Als organische Treibmittel kommen z.B. Aceton, Ethylacetat, halogensubstituierte Alkane wie Methylenchlorid, als anorganische Treibmittel z.B. Luft oder $CO_2$ in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Besonders bevorzugt wird Wasser als chemisches Treibmittel verwendet. Weitere Beispiele für Treibmittel sowie Einzelheiten über die Verwendung, von Treibmitteln sind in Vieweg und Höchtlen (Hrsg.): Kunststoff-Handbuch, Band VII, Carl-Hanser-Verlag, München 1966, S. 108f, S. 453ff und S. 507ff beschrieben. Bevorzugt ist jedoch Wasser bzw. $CO_2$ das alleinige Treibmittel.

Durchführung des Verfahrens zur Herstellung von Polyurethanschaumstoffen

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Zur Durchführung des erfindungsgemäßen Verfahrens werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US 2 764 565 beschrieben werden.

Bei den erfindungsgemäßen Schaumstoffen handelt es sich um Formschaumstoffe. Die Herstellung der Schäume wird in geschlossenen Formen durchgeführt. Dabei wird das Reaktionsgemisch in eine Form eingetragen. Als Formmaterial kommt Metall, z.B. Aluminium, Stahl oder Kunststoff, z.B. Epoxidharz in Frage. In der Form schäumt das schaumfähige Reaktionsgemisch auf und bildet den Formkörper. Die Formverschäumung kann dabei so durchgeführt werden, dass das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schaumfähiges Reaktionsgemisch einträgt, daß der gebildete Schaumstoff die Form gerade ausfüllt. Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter sog. Überpackung gearbeitet; eine derartige Verfahrensweise ist z. B. aus US 3 178 490 und US 3 182 104 bekannt.

Bei der Formverschäumung werden vielfach an sich bekannte "äußere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

**Beispiele**

Die vorliegende Erfindung wird anhand der nachfolgenden Beispiele weiter erläutert werden, ohne jedoch darauf beschränkt zu sein. Es bedeuten:

Hyperlite® Polyol 1629: Produkt der Firma Covestro. Reaktives Polyetherpolyol mit einer OH-Zahl von 31,5 mg KOH/g zur Herstellung von Kaltschäumen

Hyperlite® Polyol 1650: Produkt der Firma Covestro. Reaktives Polyetherpolyol mit einer OH-Zahl von 20,2 mg KOH/g, das mit einem SAN-Polymer (Feststoffgehalt: ca. 43 Gew.%) modifiziert ist.

B8736LF2: Tegostab® B8736LF2 ist ein Silikonstabilisator für Formschaum der Firma Evonik Dabco® 33LV: Produkt der Firma Air Products (Mischung aus 33% Triethylendiamin und 67% Dipropylenglykol)

Niax® A400: Amin-Katalysator der Firma Momentive

T80: Desmodur® T80 ist ein Produkt der Firma Bayer MaterialScience AG und besteht aus 2,4- und 2,6-Diisocyanattoluol.

Maleinsäureanhydrid: 99%, gekauft bei Sigma-Aldrich

Citraconsäureanhydrid: gekauft bei Sigma-Aldrich

(2-Dodecen-1-yl) succinic anhydride: Isomerengemisch zur Synthese, gekauft bei Merck Millipore Additiv Säurechlorid: Mischung aus 50 Gew.-% Isophthalsäuredichlorid, das in 50 Gew.-Desmodur 1806 (Produkt der Firma

Covestro) gelöst ist

Emissionsmessung nach VDA278

Die Fog-Wertbestimmung wurde nach VDA 278 durchgeführt, wobei auf die bis zu 7 Tagen Lagerung verzichtet wurde. Die Proben wurden 4 Stunden nach der Herstellung in Aluminium-Verbundfolie verpackt und so bis zur Analyse gelagert. Bei der Analyse wird ein Stück der Randzone von 1 mm Dicke untersucht. Die Analyse besteht aus einem 2-Stufen Prozess bei 90°C (für 30 Minuten; VOC-Wert) und 120 °C (für 60 Minuten; Fog-Wert). Die emittierten Substanzen werden in einem Helium-Strom transportiert und in einer Kühlfalle aufgefangen. Der Fog-Wert ist die Summe der schwerflüchtigen Verbindungen und wird als Hexadecan-Äquvalent berechnet. Es werden Substanzen im Siedebereich der n-Alkane von C14 bis C32 ausgewertet.

Herstellung von Polyurethan-Weichformschaumstoffen

In für die Herstellung von Polyurethan-Weichformschaumstoffen im Kaltschaumschaumverfahren üblicher Verarbeitungsweise nach dem Einstufenverfahren werden die in den Beispielen der in der nachfolgenden Tabelle aufgeführten Einsatzstoffe miteinander zur Reaktion gebracht. Das Reaktionsgemisch wird in eine auf 60 °C geheizte und vorher mit einem Trennmittel (PURA E1429H NV (Chem-Trend)) bestrichene Metallform eingebracht. Die Einsatzmenge wird entsprechend der angestrebten Rohdichte und Formenvolumen verwendet. Es wurde mit 9,7 Liter Form gearbeitet. Die Formteile wurden nach 4 Minuten entformt und aufgedrückt. Die Formteile wurden nach 4 Stunden in Aluminium-Verbundfolie versiegelt.

| Polyol | OH-Zahl | Vgl. 1 | Vgl. 2 | Versuch3 | Versuch4 | Vgl. 5 | Vgl. 6 | Versuch7 | Versuch8 | Vgl. 9 | Versuch 10 | Versuch 11 |
|---|---|---|---|---|---|---|---|---|---|---|---|---|
| Hyperlite 1629 | 31,5 | 60 | 60 | 60 | 60 | 60 | 60 | 60 | 60 | 60 | 60 | 60 |
| Hyperlite 1650 | 20,2 | 40 | 40 | 40 | 40 | 40 | 40 | 40 | 40 | 40 | 40 | 40 |
| Wasser (zugesetzt) | 6228 | 2,738 | 2,738 | 2,738 | 2,738 | 2,738 | 2,738 | 2,738 | 2,738 | 2,738 | 2,738 | 2,738 |
| Diethanolamin | 1601 | 0,8 | 0,8 | 0,8 | 0,8 | 0,8 | 0,8 | 0,8 | 0,8 | 0,8 | 0,8 | 0,8 |
| B8736LF2 | 72 | 0,6 | 0,6 | 0,6 | 0,6 | 0,6 | 0,6 | 0,6 | 0,6 | 0,6 | 0,6 | 0,6 |
| | 0 | | | | | | | | | | | |
| Maleinsäureanhydrid (gelöst im Polyol) | 0 | | | | 0,1 | 0,252 | 0,201 | | | | | |
| Maleinsäureanhydrid (gelöst in T80) | 0 | | 0,025 | 0,05 | | | | | | | | |
| (2-Dodecen-1-yl) succinic anhydride (bei Verarbeitung mit Polyol gemischt) | | | | | | | | 0,1 | 0,3 | | | |
| Citraconsäure (zu Polyolblend gegeben) | 0 | | | | | | | | | | 0,1 | |
| Additiv Säurechlorid | | | | | | | | | | | | 0,1 |
| Dabco 33LV | 552 | 0,3 | 0,3 | 0,3 | 0,3 | 0,3 | 0,3 | 0,3 | 0,3 | 0,3 | 0,3 | 0,3 |
| Niax A400 | 0 | 0,2 | 0,2 | 0,2 | 0,2 | 0,2 | 0,2 | 0,2 | 0,2 | 0,2 | 0,2 | 0,2 |
| | | | | | | | | | | | | |
| **Isocyanat** | **NCO %** | | | | | | | | | | | |
| T80 | 48,3 | 25,14 | 25,14 | 25,14 | 25,14 | 25,14 | 25,14 | 25,14 | 25,14 | 35,2 | 25,14 | 25,14 |
| | | | | | | | | | | | | |
| **Index (100 NCO/OH)** | | 75 | 75 | 75 | 75 | 75 | 75 | 75 | 75 | 105 | 75 | 75 |
| | | | | | | | | | | | | |
| **Emissionsergebnis (Fog-Wert nach VDA278)** | | | | | | | | | | | | |
| Fog-Wert (Hexadecanäquivalent) [mg/kg] | | 256 | 278 | 165 | 101 | | | 223 | 142 | 144 | 168 | 159 |
| | | | | | | | | | | | | |
| **Molekulargewicht Anhydrid oder Anhydrid** | **g/mol** | | 98,06 | 98,06 | 98,06 | 98,06 | 98,06 | 266,38 | 266,38 | | 112,08 | 203,02 |
| | | | | | | | | | | | | |
| **Gew.% Anhydrid oder Säurechlorid /100 Teile Polyol** | | 0 | 0,025 | 0,05 | 0,1 | 0,252 | 0,201 | 0,1 | 0,3 | 0 | 0,1 | 0,05 |
| **Gew.% Anhydrid oder Säurechlorid /Isocyanat** | | 0 | 0,10 | 0,20 | 0,40 | 1,00 | 0,80 | 0,40 | 1,2 | 0 | 0,4 | 0,20 |
| **Molarer Anteil [mol-%] bezogen auf TDI** | | 0 | 0,18 | 0,35 | 0,71 | 1,78 | 1,42 | 0,26 | 0,78 | 0 | 0,62 | 0,17 |
| | | | | | | | | | | | | |
| **Bemerkung** | | Vergleichsversuch | Vergleichsversuch | | | Schaumkollaps | Schaumkollaps | | | Vergleichsversuch | | |

* Analytisch konnte hier nur der Summenwert von 2,4-TDA und 2,6-TDA bestimmt werden

Die erfinderischen Versuche 4 und 5 zeigen deutlich niedrigere Fog-Werte als der Vergleichsversuch ohne Maleinsäureanhydrid (Vergleich 1) bzw. mit sehr niedrigen Säureanhydridmengen (Vergleich 2). Genauso zeigt der erfinderische Versuch 10 mit Citraconsäureanhydrid deutlich niedrigere Fog-Werte im VDA 278. Höhere Säureanhydridmengen als die erfinderisch beanspruchten führen zu einem instabilen Verarbeitungsverhalten, was sich in Schaumkollapsen zeigen (Vergleich 5 und 6). Wird der molare Anteil berücksichtigt, kann analog mit Dodecenylbernsteinsäureanhydrid (Versuch 7 und 8) gearbeitet werden. Vergleichsbeispiel 9 zeigt, dass die hohen Fog-Werte nur bei niedrigen Kennzahlen auftreten. Bei einer Kennzahl von 105 sinkt der Fog-Wert deutlich, der Schaum wird aber auch deutlich härter und ist somit nicht mehr mit dem Schaum bei Kennzahl 75 vergleichbar.
Versuch 11 zeigt die positive Wirkung auf die Emissionen unter Verwendung von Säurechloriden.

## Patentansprüche

1. Verfahren zur Herstellung von TDI-basierten Polyurethanweichschaumstoffen mit einer Rohdichte von ≥ 20 kg $m^{-3}$ durch Umsetzung von TDI mit mindestens einer Hydroxylgruppen-haltigen Verbindung in Gegenwart von Treibmitteln und ggf. Hilfs- und/oder Zusatzstoffen bei einem Isocyanat-Index von ≥ 70 bis ≤ 85, **dadurch gekennzeichnet, dass** die Umsetzung

   - in Gegenwart von ≥ 0,20 bis ≤ 1,25 mol-%, mindestens eines cyclischen Anhydrids einer Di- und/oder Polycarbonsäure, bezogen auf die Menge an eingesetztem TDI, oder
   - in Gegenwart von ≥ 0,15 bis ≤ 1,25 mol-% mindestens eines Carbonsäurechlorids, bezogen auf die Menge an eingesetztem TDI, erfolgt.

2. Verfahren gemäß Anspruch 1, wobei ≥ 0,25 bis ≤ 1,0 mol-% mindestens eines cyclischen Anhydrids einer Di- und/oder Polycarbonsäure eingesetzt werden.

3. Verfahren gemäß Anspruch 1, wobei wobei ≥ 0,25 bis ≤ 1,0 mol-% mindestens eines Carbonsäurechlorids eingesetzt werden.

4. Verfahren gemäß Anspruch 1 oder 2, wobei als Anhydride cyclische Anhydride einer Dicarbonsäure eingesetzt werden.

5. Verfahren gemäß Anspruch 1 oder 3, wobei die Carbonsäurechloride ausgewählt sind aus der Gruppe bestehend aus: aliphatische Carbonsäurechloride mit 2 bis 22 Kohlenstoffatomen, Gemische von $C_8$- bis $C_{22}$-Carbonsäurechloriden, deren Reste verzweigt oder linear, gesättigt oder ungesättigt und gegebenenfalls beispielsweise mit Halogen- oder Nitrogruppen substituiert sein können, aromatische, cycloaliphatische und aralkyl- oder alkylarylsubstituierte Carbonsäurechloride mit 7 bis 24 Kohlenstoffatomen.

6. Verfahren gemäß einem der Ansprüche 1 bis 5, wobei ein Polyurethanweichschaumstoff mit einer Rohdichte von ≥ 30 kg $m^{-3}$ hergestellt wird.

7. Verfahren gemäß einem der Ansprüche 1, 2, 4 oder 6, wobei die cyclischen Anhydride in Mischung mit der Hydroxylgruppen-haltigen Verbindung eingesetzt werden.

8. Polyurethanweichschaumstoffe erhältlich nach einem Verfahren gemäß einem der Ansprüche 1 bis 7.

9. Polyurethanweichschaumstoffe gemäß Anspruch 8, wobei es sich um Formschaumstoffe handelt.

10. Verwendung der Polyurethanweichschaumstoffe gemäß Anspruch 8 oder 9 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen, bevorzugt zur Herstellung von Automobilsitzen.

11. Polyurethanweichschaumstoffe, enthaltend cyclische Anhydride von Di- und/oder Polycarbonsäuren, und/oder Carbonsäurechloride in Mengen, die dazu geeignet sind, den FOG-Wert der Schäume, bestimmt gemäß VDA 278, auf einen Wert ≤ 250 mg/kg, bevorzugt ≤ 225 mg/kg zu reduzieren.

## Claims

1. Method for producing TDI-based flexible polyurethane foams having a foam density of ≥ 20 kg $m^{-3}$, by reacting TDI with at least one hydroxyl group-containing compound in the presence of blowing agents and optionally auxiliaries and/or additives, at an isocyanate index of ≥ 70 to ≤ 85, **characterized in that** the reaction is carried out

- in the presence of ≥ 0.20 to ≤ 1.25 mol% of at least one cyclic anhydride of a di- and/or polycarboxylic acid, based on the amount of TDI used, or
- in the presence of ≥ 0.15 to ≤ 1.25 mol% of at least one carbonyl chloride, based on the amount of TDI used.

**2.** Method according to Claim 1, wherein ≥ 0.25 to ≤ 1.0 mol% of at least one cyclic anhydride of a di- and/or polycarboxylic acid is used.

**3.** Method according to Claim 1, wherein ≥ 0.25 to ≤ 1.0 mol% of at least one carbonyl chloride is used.

**4.** Method according to Claim 1 or 2, wherein the anhydrides used are cyclic anhydrides of a dicarboxylic acid.

**5.** Method according to Claim 1 or 3, wherein the carbonyl chlorides are selected from the group consisting of: aliphatic carbonyl chlorides having 2 to 22 carbon atoms, mixtures of $C_8$- to $C_{22}$- carbonyl chlorides, radicals of which can be branched or linear, saturated or unsaturated and optionally can be substituted, for example, by halogen or nitro groups, aromatic, cycloaliphatic and aralkyl- or alkylaryl-substituted carbonyl chlorides having 7 to 24 carbon atoms.

**6.** Method according to any of Claims 1 to 5, wherein a flexible polyurethane foam is produced having a foam density of ≥ 30 kg $m^{-3}$.

**7.** Method according to any of Claims 1, 2, 4 or 6, wherein the cyclic anhydrides are used in a mixture with the hydroxyl group-containing compound.

**8.** Flexible polyurethane foams obtainable by a method according to any of Claims 1 to 7.

**9.** Flexible polyurethane foams according to Claim 8, wherein said foams are molded foams.

**10.** Use of the flexible polyurethane foams according to Claim 8 or 9 for producing furniture cushioning, textile inlays, mattresses, automotive seats, headrests, armrests, sponges, headlinings, door trims, seat covers or constructional elements, preferably for producing automotive seats.

**11.** Flexible polyurethane foams comprising cyclic anhydrides of di- and/or polycarboxylic acids and/or carbonyl chlorides in amounts which are suitable for reducing the FOG value of the foams, determined in accordance with VDA 278, to a value ≤ 250 mg/kg, preferably ≤ 225 mg/kg.

## Revendications

**1.** Procédé pour la préparation de mousses souples de polyuréthane à base de TDI dotées d'une densité apparente ≥ 20 kg.$m^{-3}$ par transformation de TDI avec au moins un composé contenant des groupes hydroxyle en présence de propulseurs et éventuellement d'auxiliaires et/ou d'additifs à un indice d'isocyanate de ≥ 70 à ≤ 85, **caractérisé en ce que** la transformation est réalisée

- en présence de ≥ 0,20 à ≤ 1,25 % en moles d'au moins un anhydride cyclique d'un acide dicarboxylique et/ou polycarboxylique, par rapport à la quantité de TDI utilisé, ou
- en présence de ≥ 0,15 à ≤ 1,25 % en moles d'au moins un chlorure d'acide carboxylique, par rapport à la quantité de TDI utilisé.

**2.** Procédé selon la revendication 1, ≥ 0,25 à ≤ 1,0 % en moles d'au moins un anhydride cyclique d'un acide dicarboxylique et/ou polycarboxylique étant utilisé.

**3.** Procédé selon la revendication 1, ≥ 0,25 à ≤ 1,0 % en moles d'au moins un chlorure d'acide carboxylique étant utilisé.

**4.** Procédé selon la revendication 1 ou 2, des anhydrides cycliques d'un acide dicarboxylique étant utilisés en tant qu'anhydrides.

**5.** Procédé selon la revendication 1 ou 3, les chlorures d'acides carboxyliques étant choisis dans le groupe constitué par : des chlorures d'acides carboxyliques aliphatiques comportant 2 à 22 atomes de carbone, des mélanges de chlorures d'acides carboxyliques en $C_{8-22}$, dont les radicaux peuvent être ramifiés ou linéaires, saturés ou insaturés

et éventuellement par exemple substitués par des groupes halogène ou nitro, des chlorures d'acides carboxyliques aromatiques, cycloaliphatiques et substitués par aralkyle ou alkylaryle comportant 7 à 24 atomes de carbone.

**6.** Procédé selon l'une quelconque des revendications 1 à 5, une mousse souple de polyuréthane dotée d'une densité apparente $\geq$ 30 $kg.m^{-3}$ étant préparée.

**7.** Procédé selon l'une quelconque des revendications 1, 2, 4 ou 6, les anhydrides cycliques étant utilisés en mélange avec le composé contenant des groupes hydroxyle.

**8.** Mousses souples de polyuréthane pouvant être obtenues par un procédé selon l'une quelconque des revendications 1 à 7.

**9.** Mousses souples de polyuréthane selon la revendication 8, qui sont des mousses moulées.

**10.** Utilisation des mousses souples de polyuréthane selon la revendication 8 ou 9 pour la préparation de rembourrages de meubles, de carcasses textiles, de matelas, de sièges automobiles, d'appuis-tête, d'accoudoirs, d'épongés, d'habillages de plafond, de parements latéraux de porte, de couvre-sièges ou de composants, préférablement pour la préparation de sièges automobiles.

**11.** Mousses souples de polyuréthane, contenant des anhydrides cycliques d'acides dicarboxyliques et/ou polycarboxyliques, et/ou des chlorures d'acides carboxyliques en des quantités qui sont appropriées pour réduire la valeur FOG des mousses, déterminée selon la norme VDA 278, à une valeur $\leq$ 250 mg/kg, préférablement $\leq$ 225 mg/kg.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1117718 B1
- DE 10343099
- US 3652639 A
- US 4421872 A
- US 4310632 A
- US 1922451 A
- US 2674619 A
- US 1922459 A
- US 3190927 A
- US 3346557 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 2046861 A
- EP 0176013 A
- US 2834748 A
- US 2917480 A
- US 3629308 A
- DE 2558523 A
- DE 1694142 A
- DE 1694215 A
- DE 1720768 A
- US 2764565 A
- US 3178490 A
- US 3182104 A
- DE 2121670 A
- DE 2307589 A


### In der Beschreibung aufgeführte Nicht-Patentliteratur


- Reaction Polymers. Hanser Verlag, 1992, 66-96
- Polyurethane. Kunststoffhandbuch. Hanser Verlag, 1993, vol. 7, 57-75
- Polyurethane. Kunststoffhandbuch. vol. 7
- *Reaction Polymers*
- Kunststoff-Handbuch. Carl-Hanser-Verlag, 1966, vol. VII, 96-102
- Kunststoff-Handbuch. Carl-Hanser-Verlag, 1966, vol. VII, 103-113
- Kunststoff-Handbuch. Carl-Hanser-Verlag, 1966, vol. VII
- Polyurethane. Kunststoff-Handbuch. vol. VII